# EUROPÄISCHE PATENTANMELDUNG

(11) **EP 4 130 567 A1**
(43) Veröffentlichungstag der Anmeldung: **08.02.2023**
(21) Anmeldenummer: 21189928.1
(22) Anmeldetag: 05.08.2021
(51) Int. Cl.: F21V 23/04, G01J 5/04, G01J 5/0806, G01J 5/08, G08B 13/19, G01J 5/00

(54) **SENSOREINRICHTUNG ZUM ERFASSEN EINER BEWEGUNG EINES WÄRMESTRAHLENDEN OBJEKTS UND ELEKTRISCHE VORRICHTUNG MIT EINER DERARTIGEN SENSOREINRICHTUNG**

(71) Anmelder: Swisslux AG, 8618 Oetwil am See (CH)
(72) Erfinder: HOCHSTRASSER, Samuel, 8117 Fällanden (CH)
(74) Vertreter: Patentbüro Paul Rosenich AG

(57) **Zusammenfassung**

Die Erfindung betrifft eine Sensoreinrichtung 15 zum Erfassen einer Bewegung eines wärmestrahlenden Objekts, insbesondere zum Erfassen einer Bewegung eines Lebewesens, umfassend ein Sensorgehäuse 16 mit einer ersten Sensoreinheit 20, wobei die erste Sensoreinheit 20 ausgebildet ist, elektromagnetische Strahlung im Infrarot-Bereich zu detektieren, und das Sensorgehäuse 16 einen ersten Gehäuseabschnitt 17 aus einem Kunststoffmaterial 22 aufweist, welcher transparent für elektromagnetische Strahlung im Wellenzahlenbereich von 2000cm⁻¹ bis 400 cm⁻¹ ist, und das Kunststoffmaterial 0.5 bis 8 Gew.% farbgebendes Füllmaterial 23 umfasst. Die Erfindung betrifft auch eine elektrische Vorrichtung mit einer Sensoreinrichtung zum Erfassen einer Bewegung eines wärmestrahlenden Objekts, sowie die Verwendung der Sensoreinrichtung in einer elektrischen Vorrichtung.

## Beschreibung

Die Erfindung betrifft eine Sensoreinrichtung zum Erfassen einer Bewegung eines wärmestrahlenden Objekts gemäss des Anspruchs 1 sowie eine elektrische Vorrichtung gemäss des Anspruchs 12 und die Verwendung der Sensoreinrichtung in einer elektrischen Vorrichtung gemäss des Anspruchs 15.

Herkömmliche Sensoreinrichtungen im Infrarotbereich werden PIR-Sensoren (polyelektrische Infrarotsensoren) genannt und weisen zumindest ein PIR-Fenster aus Kunststoff auf, welches transparent für elektromagnetische Strahlung im Wellenzahlenbereich von 2000cm⁻¹ bis 400 cm⁻¹ (Infrarotbereich) ist. Dabei unterscheidet sich typischerweise das Kunststoffmaterial des Sensorgehäuses von dem Kunststoffmaterial des PIR-Fensters. Das Kunststoffmaterial des Sensorgehäuses ist typischerweise opak und intransparent im Infrarotbereich. Typischerweise sind die PIR-Fenster aus Polyethylen oder anderen Kunststoffmaterialien gefertigt, welche eine sehr dünne Wandstärke aufweisen müssen, um eine für eine Sensoreinrichtung ausreichende IR-Transparenz aufzuweisen, sodass deren mechanische Festigkeit gering ist.

Die WO2018/234094 A1 offenbart eine Sensoreinrichtung zum Erfassen einer Bewegung eines wärmestrahlenden Objekts mit einem Sensorgehäuse und mit einer ersten Sensoreinheit. Die erste Sensoreinheit ist ausgebildet, elektromagnetische Strahlung im Infrarot-Bereich zu detektieren. Darüber hinaus ist ein Umgebungslichtsensor vorhanden. Das Sensorgehäuse umfasst eine Abdeckung aus einem PMMA Kunststoffmaterial, das transparent für elektromagnetische Strahlung im Infrarot-Bereich und im sichtbaren Bereich ist, wobei in der Abdeckung eine Fresnellinse eingearbeitet ist.

Nachteilig an dieser bekannten Lösung ist, dass eine unzureichende Detektion der Wärmestrahlung eines Lebewesens im Aussenbereich zu erwarten ist und die Abdeckung aus einem zum Sensorgehäuse unterschiedlichen Material gefertigt ist und daher von aussen sichtbar ist.

Aufgabe der vorliegenden Erfindung ist es somit, eine Vorrichtung zu schaffen, welche zumindest einen der vorgenannten Nachteile nicht aufweist und insbesondere eine verbesserte Sensoreinrichtung zu schaffen, welche von einem wärmestrahlenden Objekt, insbesondere mit freiem Auge nicht erkennbar ist und mechanisch robust aufgebaut ist. Des Weiteren soll eine verbesserte elektrische Vorrichtung mit einer derartigen Sensoreinrichtung geschaffen werden, wobei die Sensoreinrichtung nicht erkennbar ist.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss der Erfindung umfasst eine Sensoreinrichtung zum Erfassen einer Bewegung eines wärmestrahlenden Objekts ein Sensorgehäuse mit einer ersten Sensoreinheit, wobei die erste Sensoreinheit ausgebildet ist, elektromagnetische Strahlung im Infrarot-Bereich zu detektieren, und das Sensorgehäuse einen ersten Gehäuseabschnitt aus einem Kunststoffmaterial aufweist, welcher transparent für elektromagnetische Strahlung im Wellenzahlenbereich von 2000cm⁻¹ bis 400 cm⁻¹ ist, und das Kunststoffmaterial 0.5 bis 8 Gew.% farbgebendes Füllmaterial umfasst.

Eine derartige Sensoreinrichtung kann zum Erfassen einer Bewegung eines Lebewesens verwendet werden, sodass diese Sensoreinrichtung eine polyelektrische Sensoreinrichtung ist. Das Lebewesen erkennt die Sensoreinrichtung optisch nicht, da das Kunststoffmaterial nur für Infrarotstrahlen im Wellenlängenbereich von 5µm - 25µm transparent ist und aufgrund des farbgebenden Füllmaterials, im beanspruchten Gewichtsprozent (Gew%) - Bereich, im sichtbaren Bereich von 300 nm bis 650 nm intransparent bzw. lichtundurchlässig bzw. opak ist. Darüber hinaus bewirkt das Füllmaterial im beanspruchten Gewichtsprozent (Gew%) - Bereich im Kunststoffmaterial eine überraschend hohe mechanische Festigkeit, sodass derartige Sensoreinrichtungen im Aussenbereich angeordnet werden können und vor Umwelteinflüssen, wie Spritzwasser und/oder Feuchte geschützt sind, aber auch vor Hagel und damit vor mechanischen Einflüssen hervorragend geschützt sind. Die mechanische Verstärkung des Kunststoffmaterials durch das Füllmaterial verhindert auch Beschädigungen beim Montieren der Sensoreinrichtung während der Montage durch einen Benutzer. Derartige Sensoreinrichtungen sind von aussen nicht erkennbar.

Die hier vorliegenden Angaben zu den Gewichtsprozent-Anteilen des farbgebenden Füllmaterials im Kunststoffmaterial gelten auch für entsprechende Volumenprozent-Anteile.

Gleichzeitig ist durch das Hinzufügen des farbgebenden Füllmaterials der Erfassungsbereich bzw. die Erfassungslänge der Sensoreinheit einstellbar, sodass die Entfernung des zu detektierenden Lebewesens abhängig von dem Gew% des farbgebenden Füllmaterials variieren kann.

Als farbiges Füllmaterial werden Füllstoffe des gesamten Farbspektrums verwendet wie auch schwarze oder weisse Füllmaterialien. Als Füllstoff wird nicht ausschliesslich ein Streckmittel für Kunststoffe, wie Kreide, Sand, Kieselgur, Glasfasern und -kugeln, Zinkoxid, Quarz, Holzmehl, Stärke, Graphit, Russe und Talkum bezeichnet, sondern jedenfalls auch Additive bezeichnet, welche gegebenenfalls auch im Kunststoff-Rohmaterial als Compound vorhanden sind. Beispielsweise kann ein Füllstoff auch Phthalat, UV Absorber, Anti Oxidans Zusätze, Flüssigstoffe und/oder Feststoff umfassen bzw. sein. Damit ist das Sensorgehäuse robust gegen UV-Licht-Einflüsse und das Kunststoffmaterial nicht spröde.

Die geometrischen Aussenformen zumindest des ersten Gehäuseabschnitts können nun derart frei ausgestaltet werden - beispielsweise kuppelförmig oder flach, oder dergleichen -, dass diese möglichst unscheinbar sind und keine Angriffsflächen für unerwünschte externe Kräfte bieten und/oder keine Angriffsflächen für Ablagerungen, wie Schmutz, Staub oder dergleichen, bieten.

Bevorzugt umfasst das Kunststoffmaterial 3 Gew.% farbgebendes Füllmaterial, sodass eine verbesserte Sensoreinrichtung geschaffen wird, die besonders robust ist und hervorragende Transparenz im Infrarotbereich aufweist sowie vollständig opak ist. Selbst wenn der erste Gehäuseabschnitt Kratzspuren aufweist, bleibt die Funktionalität der Sensoreinrichtung unbeeinflusst.

Vorzugsweise ist der erste Gehäuseabschnitt ein vom Sensorgehäuse separierbares Sensorgehäuseteil. Dieses Sensorgehäuseteil ist beispielsweise die Abdeckung des Sensorgehäuses, welche Zugang zu der Sensoreinheit ermöglicht. Damit ist die Sensoreinheit von aussen einfach zugänglich und kann gegebenenfalls ausgetauscht werden. Darüber hinaus kann das Sensorgehäuse aus einem ersten Material bestehen und das Sensorgehäuseteil aus dem Kunststoffmaterial mit dem farbgebenden Füllmaterial, wie zuvor offenbart. Unterschiedliche Sensorgehäuseteile können aus unterschiedlich hergestellten und aus teuren Materialien bestehen, wobei das separierbare Sensorgehäuseteil aus dem robusten Kunststoffmaterial gefertigt ist. Das Sensorgehäuse und das Sensorgehäuseteil unterscheiden sich optisch nicht voneinander. Ein PIR-Fenster, wie aus dem Stand der Technik bekannt, ist von aussen nicht mehr erkennbar. Beispielsweise ist je nach Aufbau des separierbaren Sensorgehäuseteils der Erfassungsbereich bzw. die Erfassungslänge oder Erfassungsstrecke der Sensoreinheit einstellbar, sodass die Sensitivität einer bestehenden Sensoreinrichtung durch das Austauschen des separierbaren Sensorgehäuseteils variierbar ist, ohne dass die Sensoreinheit getauscht wird.

Insbesondere sind am ersten Gehäuseabschnitt Befestigungsabschnitte zum mechanischen Befestigen des ersten Gehäuseabschnitts am Sensorgehäuse angeordnet. Damit ist das als erster Gehäuseabschnitt ausgebildete Sensorgehäuseteil einfach und fest, beispielsweise mithilfe einer Schraube oder eines Bolzens, am Sensorgehäuse oder an einer elektrischen Vorrichtung befestigbar. Dabei ist die Entstehung von Rissen oder Bruchstellen am ersten Gehäuseabschnitt verhindert.

Alternativ oder ergänzend sind am ersten Gehäuseabschnitt Schnellverschlusselemente und/oder Schnappelemente, wie beispielsweise Schnapphaken, und/oder Befestigungsklammern angeordnet, mit denen der erste Gehäuseabschnitt einfach lösbar und reproduzierbar positionierbar am Sensorgehäuse oder an einer elektrischen Vorrichtung angeordnet ist. Das zuvor beschriebene Kunststoffmaterial weist überraschenderweise eine hinreichende Plastizität und/oder Elastizität auf. Die Schnellverschlusselemente und/oder Schnappelemente sind mithilfe der Spritzgusstechnik direkt beim Produzieren der Sensoreinrichtung herstellbar.

Insbesondere ist das gesamte Sensorgehäuse aus dem Kunststoffmaterial mit dem farbgebenden Füllmaterial gefertigt, welches transparent für elektromagnetische Strahlung im Wellenzahlenbereich von 2000cm⁻¹ bis 400 cm-1 ist, und das Kunststoffmaterial 0.5 bis 8 Gew.% farbgebendes Füllmaterial umfasst, wie zuvor offenbart. Damit ist das Sensorgehäuse aus demselben Material aufgebaut, sodass dessen mechanische Robustheit weiter verbessert ist und das Eindringen von Flüssigkeit in das Sensorgehäuse ausgeschlossen werden kann. Das gesamte Sensorgehäuse kann in einem Herstellungsschritt - beispielsweise durch thermisches Spritzgiessen, erzeugt werden. Ein robustes Sensorgehäuse ist einfach und von weniger geschulten Benutzern montierbar.

Bevorzugterweise umfasst das Kunststoffmaterial des ersten Gehäuseabschnitts Polypropylen. Polypropylen ist ein bekanntes Material, welches als Sensorgehäuse für Sensoreinrichtungen verwendet wird, wobei das Hinzufügen des farbgebenden Materials, wie zuvor offenbart, zumindest den ersten Gehäuseabschnitt transparent für elektromagnetische Strahlung im Wellenzahlenbereich von 2000cm⁻¹ bis 400 cm⁻¹ macht und gleichzeitig die mechanischen Eigenschaften von Polypropylen ausnützt. Dabei können vorteilhaft die bekannten Herstellungsverfahren für Sensorgehäuse aus Polypropylen verwendet werden, und eine Sensoreinrichtung hergestellt werden, deren Vielfalt von robustem Design und der Ästhetik weiter verbesserbar ist, insbesondere können geschlossene Sensorgehäuse hergestellt werden, die bevorzugt wasserdicht sind. Eine geringe Menge an farbgebenden Füllmaterial reicht aus, um das ansonst transparente Material einzufärben, ohne dass die Transparenz im Infrarotbereich beeinflusst ist.

Insbesondere umfasst das Kunststoffmaterial Polypropylen High-Modulus. Polypropylen High-Modulus ist eine besonders geeignete Variante der Materialgruppe der Polyolefine mit einer hohen UV-Stabilität und einer hohen Wärmealterungsstabilität, welche gleichzeitig eine IR-Transparenz von grösser 88% ermöglicht und daher besonders geeignet als Kunststoffmaterial für den ersten Gehäuseabschnitt der Sensoreinrichtung geeignet ist. Bevorzugt ist ein amorpher Thermoplast, wie Polymethylmethacrylat (PMMA), als Kunststoffmaterial verwendbar, der ebenfalls die zuvor genannten Eigenschaften aufweisen kann.

Bevorzugt umfasst das Füllmaterial Farbstoffe, Titanoxid, Talkum, Bariumsulfat oder HALS (Hindered Amine Light Stabilizers). Diese Füllmaterialien sind besonders geeignet, da diese einfach herstellbar sind und sich gut mit den zuvor genannten Kunststoffmaterialien mischen oder compoundieren lassen. Damit können Sensorgehäuse in unterschiedlichen Farben hergestellt werden, sodass die Sensoreinrichtung sich effektiv in elektrische Vorrichtungen integrieren lassen und die Sensoreinrichtung von aussen nicht ersichtlich ist. Die Erfassungsstrecke der elektromechanischen Strahlung im Infrarotbereich kann sich je nach Füllmaterial unterscheiden.

Vorzugsweise weist der erste Gehäuseabschnitt eine Wandstärke von 0.15 mm bis 3.0 mm auf. Die Wandstärke des ersten Gehäuseabschnitts steht in Korrelation mit der Durchlässigkeit der elektromagnetischen Strahlung im Infrarotbereich, wie auch im sichtbaren Wellenzahlbereich, sowie mit der Gew%-Anteil des farbgebenden Füllmaterials - siehe in der nachfolgenden Tabelle 1. Dabei gilt - je dünner die Wandstärke des ersten Gehäuseabschnitts, umso transparenter ist es für elektromagnetische Strahlung im Wellenzahlenbereich von 2000cm⁻¹ bis 400 cm⁻¹. Die Transparenz für elektromagnetische Strahlung im Bereich 380 nm bis 780 nm wird jedoch nur zum Teil von der Wandstärke des ersten Gehäuseabschnitts bestimmt, sondern auch von dem Gew%- Anteil des farbgebenden Füllmaterials. Die Wandstärke des ersten Gehäuseabschnitts trägt jedoch wesentlich zur Robustheit und Langzeitstabilität der Sensoreinrichtung bei. Daher ergibt sich je nach gewählter Wandstärke und Gew%-Anteil des farbgebenden Füllmaterials im Kunststoff ein überraschender Synergieeffekt, um eine verbesserte Sensoreinrichtung zu schaffen, welche von einem Benutzer optisch nicht erkennbar ist. Ab einem Gew%-Anteil von 2 Gew.% farbgebenden Füllmaterial und einer Wandstärke von 0.35mm ist die Transparenz des Kunststoffmaterials für elektromagnetische Strahlung im sichtbaren Wellenlängenbereich kleiner als 12% - also quasi opak.

Bevorzugt ist die Wandstärke des ersten Gehäuseabschnitts grösser als 0.35 mm. Damit ist der erste Gehäuseabschnitt, neben den zuvor genannten Vorteilen, ausreichend robust, um bei der fachgerechten Montage kaum zerstörbar. Eine bevorzugte Ausführungsform der Sensoreinrichtung weist einen ersten Gehäuseabschnitt mit Polypropylen High-Modulus als Kunststoffmaterial, mit einer Wandstärke bzw. Materialstärke von 0.35 mm und mit 3 Gew% farbgebendes Füllmaterial, auf, sodass die zuvor angeführten Vorteile und technischen Effekte optimiert sind - siehe Tabelle 1.

Bevorzugterweise weist das Kunststoffmaterial ein E-Modul von bis zu 3000 MPa auf. Insbesondere ist das E-Modul 2200MPa. Das E-Modul beschreibt den Zusammenhang von Dehnung und Spannung, der bei der Verformung von festen Körpern mit linear elastischem Verhalten wesentlich ist und dient als Materialvergleich in der Werkstoffkunde. Das Elastizitätsmodul weist einen umso grösseren Betrag auf, je mehr Widerstand das Material der Verformung entgegenbringt. Das Kunststoffmaterial im angeführten Bereich weist eine ausreichende Steifigkeit bei den zuvor genannten Wandstärken des ersten Gehäuseabschnitts auf.

Alternativ oder ergänzend weist das Kunststoffmaterial eine Zugspannungsfestigkeit von 80 MPa auf. Insbesondere ist die Zugspannungsfestigkeit 40 MPa. Die Zugspannungsfestigkeit ist ein Mass für die innere Beanspruchung eines Körpers infolge dessen Belastung von aussen. Das Kunststoffmaterial im angeführten Bereich weist eine ausreichende Robustheit bei den zuvor genannten Wandstärken des ersten Gehäuseabschnitts auf.

Vorzugsweise umfassen das Sensorgehäuse und zumindest der erste Gehäuseabschnitt dasselbe Kunststoffmaterial. Auch wenn das gesamte Sensorgehäuse der Sensoreinrichtung mit dem zuvor beschriebenen Kunststoffmaterial gefertigt wird, ist eine hinreichende Steifigkeit und Robustheit gegeben. Es ist am Sensorgehäuse von aussen nicht mehr erkennbar, wo der erste Gehäuseabschnitt angeordnet ist. Damit ist das Sensorgehäuse gut in elektronische Vorrichtungen integrierbar, da kein Materialübergang erkennbar ist und die Sensoreinrichtung beispielsweise als Überwachungssensor in Sicherheitsbereichen einsetzbar ist. Somit kann jede elektronische Vorrichtung eine Überwachungsvorrichtung sein, ohne dass dies am ersten Blick sichtbar ist.

Bevorzugterweise ist zumindest eine elektronische Schalteinrichtung vorhanden, welche im Sensorgehäuse angeordnet ist. Insbesondere ist die elektronische Schalteinrichtung hinter dem ersten Gehäuseabschnitt angeordnet. Die elektronische Schalteinrichtung steuert und regelt die erste Sensoreinheit, sodass die Sensoreinheit reproduzierbar detektieren kann. Die elektronische Schalteinrichtung umfasst dafür einen Prozessor, Eingabeeinrichtungen zum Einstellen der Parameter für die erste Sensoreinheit und Schnittstellen für die Energieversorgung sowie für den Datenaustausch mit einem Rechenzentrum bzw. einem Überwachungszentrum. Die gesamte Sensoreinrichtung ist somit kompakt gebaut und einfach als Ganzes austauschbar bzw. montierbar.

Vorzugsweise ist im ersten Gehäuseabschnitt eine Dichtung angeordnet, die in einem thermischen Spritzgussprozess an den ersten Gehäuseabschnitt anbringbar ist. Dabei wird mit einer Spritzgiessmaschine das Material der Dichtung verflüssigt (plastifiziert) und in eine Form, dem Spritzgiesswerkzeug, unter Druck auf den ersten Gehäuseabschnitt aufgespritzt. Die Dichtung ist somit untrennbar mit dem ersten Gehäuseabschnitt verbunden, sodass ein Eindringen von Feuchte oder einer Flüssigkeit in das Innere des Sensorgehäuses verhindert ist.

Bevorzugterweise ist eine optische Linse vorhanden, durch welche die elektromagnetische Strahlung gelenkt wird, sodass diese gebündelt wird und die Richtung der Erfassungsstrecke der ersten Sensoreinheit mithilfe der Linse gebündelt vorgegeben werden kann. Bevorzugt ist der erste Gehäuseabschnitt abschnittsweise als die optische Linse ausgebildet. Das Integrieren der optischen Linse in den ersten Gehäuseabschnitt bzw. in das Sensorgehäuse vereinfacht den Aufbau der Sensoreinrichtung und minimiert die Anzahl der Materialschnittstellen. Beispielsweise ist die optische Linse einfach austauschbar, sodass die Wartungsmöglichkeit der Sensoreinrichtung verbessert ist.

Vorteilhaft ist die optische Linse eine Fresnellinse. Damit kann die optische Linse klein und dünn gestaltet werden und aus Kunststoffmaterial geformt werden. Die Fresnellinse bündelt die elektromagnetische Strahlung, sodass ein grösserer IR-Bereich für die Sensoreinrichtung zur Verfügung steht. Insbesondere kann die optische Linse einen strukturierten Bereich mit unterschiedlichem Muster aufweisen, von denen jeder Bereich eine Fresnellinse ist. Die verschiedenen Facetten und Unterlinsen erzeugen eine Reihe von Erfassungsbereichen, die miteinander verschachtelt sind.

Vorzugsweise ist ein optischer Diffusor vorhanden, welcher in dem ersten Gehäuseabschnitt angeordnet ist. Ein optischer Diffusor ist ein optisches Bauteil, das dazu eingesetzt wird, elektromagnetische Strahlung zu streuen. Die dabei genutzten Effekte sind die diffuse Reflexion und die Brechung der elektromagnetischen Strahlung. Derartige Diffuser bewirken eine erhöhte Empfindlichkeit für einen grossen Raumwinkelbereich, sodass die Sensoreinrichtung weiter verbessert ist und für unterschiedliche Einsatzgebiete im Innenbereich und im Aussenbereich verwendbar ist.

Bevorzugterweise ist ein Mikrofon als weitere Sensoreinheit vorhanden, wobei das Kunststoffmaterial zumindest abschnittsweise transparent für Schallwellen ist. Die Sensoreinrichtung erfasst damit neben der Bewegung eines Lebewesens auch Geräusche, wie beispielsweise Stimmen oder Laute des Lebewesens. Damit ist die Funktionalität der Sensoreinrichtung weiter verbessert. Insbesondere kombiniert die elektronische Schalteinrichtung die Signale der ersten Sensoreinheit und die Signale des Mikrofons, sodass die Detektion auf vordefinierte Lebewesen selektierbar ist. Beispielsweise kann die Sensoreinrichtung einen Menschen von einem Tier unterscheiden und/oder unterschiedliche Menschen oder unterschiedliche Tiere selektiv erkennen. Dabei kann eine Stimmerkennungssoftware in der elektronischen Schalteinrichtung verwendet werden, sodass die Sensoreinrichtung selektiv reagiert.

Insbesondere kann die Sensoreinrichtung eine Kamera als weitere Sensoreinheit aufweisen. Die Kamera kann aussen am Sensorgehäuse angeordnet sein oder innerhalb des Sensorgehäuses angeordnet sein. Dabei ist zumindest der erste Gehäuseabschnitt im für die Kamera erfassbaren Wellenlängenbereich transparent. Die Signale der Kamera können, wie zuvor beschrieben, in der elektronischen Schalteinrichtung mit den Signalen der anderen Sensoreinheiten kombiniert werden, sodass auch bildgebende Signale auswertbar sind.

Die Erfindung betrifft eine elektrische Vorrichtung mit einer Sensoreinrichtung, wie zuvor offenbart, wobei die Sensoreinrichtung in der elektrischen Vorrichtung integriert ist.

Eine derartige elektrische Vorrichtung kann zum Erfassen einer Bewegung eines Lebewesens verwendet werden, wobei das Lebewesen die Sensoreinrichtung optisch nicht erkennt, und eine überraschend hohe mechanische Festigkeit aufweisen, sodass derartige elektrische Vorrichtungen im Aussenbereich angeordnet werden können und vor Umwelteinflüssen, wie Spritzwasser und/oder Feuchte geschützt sind, aber auch vor Hagel und damit vor mechanischen Einflüssen hervorragend geschützt sind. Gleichzeitig ist durch das Hinzufügen des farbgebenden Füllmaterials der Erfassungsbereich bzw. die Erfassungslänge der Sensoreinheit in der elektrischen Vorrichtung einstellbar, sodass die Entfernung des zu detektierenden Lebewesens abhängig von dem Gew% des farbgebenden Füllmaterials variieren kann.

Bevorzugt ist zumindest der erste Gehäuseabschnitt der Sensoreinrichtung separierbar an der elektrischen Vorrichtung angeordnet. Der erste Gehäuseabschnitt ist in dieser Ausführungsform somit ein Sensorgehäuseteil. Damit ist die Sensoreinrichtung von aussen einfach zugänglich und kann gegebenenfalls ausgetauscht werden. Darüber hinaus kann die elektrische Vorrichtung aus einem ersten Material bestehen und das Sensorgehäuseteil aus dem Kunststoffmaterial mit dem farbgebenden Füllmaterial, wie zuvor offenbart. Unterschiedliche Bauteile der elektrischen Vorrichtung können aus unterschiedlich hergestellten und aus teuren Materialien bestehen, wobei das separierbare Sensorgehäuseteil aus dem robusten Kunststoffmaterial gefertigt ist. Beispielsweise ist je nach Aufbau des separierbaren Sensorgehäuseteils der Erfassungsbereich bzw. die Erfassungslänge oder Erfassungsstrecke der Sensoreinheit einstellbar, sodass die Sensitivität einer bestehenden Sensoreinrichtung durch das Austauschen des separierbaren Sensorgehäuseteils variierbar ist, ohne dass die Sensoreinheit getauscht wird.

Insbesondere ist die elektrische Vorrichtung eine elektrische Installationseinrichtung für einen Innenraum oder einer Aussenanlage. Als elektrische Installationseinrichtung kann ein Stromverteiler, ein Kabelkanal, eine Steckdose, ein Raumverteiler oder dergleichen sein.

Insbesondere ist der erste Gehäuseabschnitt ein separierbares Vorrichtungsgehäuseteil. Damit zählt der jeweilige erste Gehäuseabschnitt nun nicht unmittelbar zu der Sensoreinrichtung, wie zuvor beschrieben, sondern ist ein separierbares Vorrichtungsgehäuseteil. Beispielsweise ist das Vorrichtungsgehäuseteil eine separierbare, flache Abdeckung der elektrischen Vorrichtung. Das Vorrichtungsgehäuseteil weist dabei zumindest die erfindungsrelevanten strukturellen und funktionellen Eigenschaften des zuvor beschriebenen ersten Gehäuseabschnitts auf und umfasst somit zumindest das Kunststoffmaterial mit dem farbgebenden Füllmaterial. Damit kann eine handelsübliche Sensoreinrichtung, welche zumindest aus der ersten Sensoreinheit und einer elektronischen Schalteinrichtung besteht in eine beliebige elektrische Vorrichtung eingebaut werden.

Vorzugsweise ist die elektrische Vorrichtung eine Beleuchtungseinrichtung, oder eine elektrische Schaltereinrichtung, oder ein elektrisches Gerät. Damit ist die Sensoreinrichtung strukturell und funktionell direkt mit der elektrischen Vorrichtung verbunden, sodass auf räumlich beabstandete Einrichtungen, wie Energieleitungen oder Datenleitungen verzichtet wird. Auf zusätzliche Installationsprozesse und/oder bauliche Änderungen an Gebäuden kann verzichtet werden.

Bevorzugterweise ist die Sensoreinrichtung in der elektrischen Vorrichtung zugleich ein Betätigungselement und nimmt mechanische Kräfte auf und/oder überträgt Kräfte an die elektronische Schalteinrichtung. Als Betätigungselement ist hier vorliegend ein Schalter oder ein Taster oder eine andere Installationseinrichtung, welche mechanische Kräfte aufnimmt und/oder überträgt. Die zuvor beschriebene Sensoreinrichtung ist im Betätigungselement eingebaut und ist von aussen nicht erkennbar.

Die Erfindung betrifft zusätzlich die Verwendung der zuvor beschriebenen Sensoreinrichtung in einer elektrischen Vorrichtung, wie zuvor beschrieben. Damit kann eine handelsübliche Sensoreinrichtung, in eine beliebige elektrische Vorrichtung eingebaut werden, ohne dass diese von aussen sichtbar wäre.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Formulierungen wie erstes, zweites, weiteres oder dergleichen dienen nur zum Unterscheiden von Merkmalen.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer erfindungsgemässen Sensoreinrichtung in einer perspektivischen Ansicht,
- Fig. 2: die Sensoreinrichtung gemäss Fig. 1 mit einem Sensorgehäuse in einer perspektivischen Ansicht,
- Fig. 3: die Sensoreinrichtung gemäss Fig. 1 in einer Schnittansicht,
- Fig. 4: die Tabelle 1, welche optische und mechanische Parameter der Sensoreinrichtung gemäss Fig.1 offenbart,
- Fig. 5: eine zweite Ausführungsform einer erfindungsgemässen Sensoreinrichtung in einer perspektivischen Ansicht,
- Fig. 6: eine dritte Ausführungsform einer erfindungsgemässen Sensoreinrichtung in einer Schnittansicht,
- Fig. 7: eine erste Ausführungsform einer erfindungsgemässen elektrischen Vorrichtung mit einer erfindungsgemässen Sensoreinrichtung in einer perspektivischen Ansicht, und
- Fig. 8: eine weitere Ausführungsform einer erfindungsgemässen elektrischen Vorrichtung mit einer erfindungsgemässen Sensoreinrichtung in einer perspektivischen Ansicht.

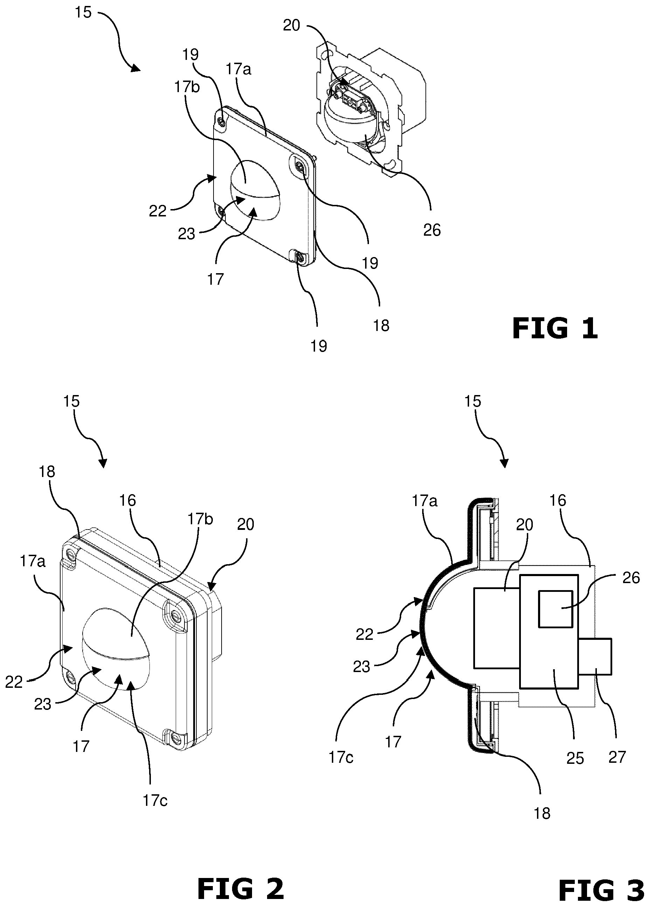

Fig. 1 bis Fig. 3 zeigen eine erste Ausführungsform der Sensoreinrichtung 15 zum Erfassen einer Bewegung eines wärmestrahlenden Objekts mit einem Sensorgehäuse 16 und mit einer ersten Sensoreinheit 20, wobei die erste Sensoreinheit 20 ausgebildet ist, elektromagnetische Strahlung im Infrarot-Bereich zu detektieren. Das Sensorgehäuse 16 weist einen ersten Gehäuseabschnitt 17 aus einem Kunststoffmaterial 22 auf, welches transparent für elektromagnetische Strahlung im Wellenzahlenbereich zumindest von 2000cm⁻¹ bis 400 cm⁻¹ ist. Der erste Gehäuseabschnitt 17 ist eine Abdeckung des Sensorgehäuses 16 und somit ein vom Sensorgehäuse 16 separierbares Sensorgehäuseteil 17a. Am ersten Gehäuseabschnitt 17 sind Befestigungsabschnitte 19 zum mechanischen Befestigen des ersten Gehäuseabschnitts 17 am Sensorgehäuse 16 angeordnet. Dafür sind an den Befestigungsabschnitten 19 Schrauben angeordnet, welche in entsprechende Öffnungen am Sensorgehäuse 16 geschraubt werden. Im ersten Gehäuseabschnitt 17 ist eine Dichtung 18 vorhanden, die in einem thermischen Spritzgussprozess an den ersten Gehäuseabschnitt 17 fixiert ist. Am ersten Gehäuseabschnitt 17 ist ein kuppelförmiger Vorsprung 17b vorhanden, welcher die kuppelförmige erste Sensoreinheit 20 abschnittsweise aufnimmt. Der erste Gehäuseabschnitt 17 sowie auch das restliche Sensorgehäuse 16 weisen eine Wandstärke von 0.35 mm auf. Im Bereich des kuppelförmigen Vorsprungs 17b ist Fresnellinse 17c im ersten Gehäuseabschnitt 17 eingearbeitet. In einer nicht gezeigten Ausführungsform der ersten Sensoreinheit, ist diese nicht kuppelförmig ausgebildet, sondern weist eine flache Frontseite auf.

Die Sensoreinheit 20 weist einen Infrarotsensor 21 auf, welcher mit einer elektronischen Schalteinrichtung 25 elektrisch verbunden ist. Die elektronische Schalteinrichtung 25 ist im Sensorgehäuse 16 hinter dem ersten Gehäuseabschnitt 17 angeordnet. Die elektronische Schalteinrichtung 25 steuert und regelt den Infrarotsensor 21 der ersten Sensoreinheit 20. Die elektronische Schalteinrichtung 25 umfasst dafür einen Prozessor 26 und Schnittstellen 27 für die Energieversorgung sowie für den Datenaustausch mit einem Rechenzentrum bzw. einem Überwachungszentrum.

Das Kunststoffmaterial 22 des Sensorgehäuseteils 17a umfasst Polypropylen High-Modulus (PP-HM) mit einem E-Modul von 2200 Mpa und einer Zugspannung von 40 Mpa. Das Kunststoffmaterial umfasst 3 Gew.% farbgebendes Füllmaterial 23. Das Kunststoffmaterial 22 ist für Infrarotstrahlen im Wellenlängenbereich von 5µm - 25µm transparent und ist aufgrund des farbgebenden Füllmaterials 23 im beanspruchten Gewichtsprozent (Gew%) - Bereich im sichtbaren Bereich von 300 nm bis 650 nm intransparent bzw. lichtundurchlässig bzw. opak. Das farbgebende Füllmaterial 23 umfasst in dieser Ausführungsform ein Gemisch aus Füllstoffen umfassend Phthalat, UV Absorber und Anti Oxidans. Weitere Gemische von Füllstoffen sind ebenfalls verwendbar.

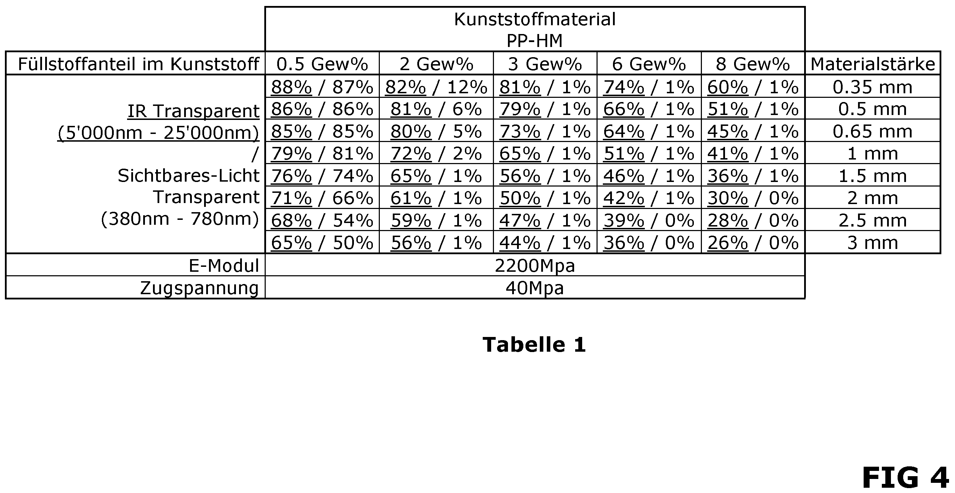

Fig. 4 zeigt in der Tabelle 1 die Ausführungsform der Sensoreinrichtung 15 mit dem Kunststoffmaterial 22 und dem Füllmaterial 23, wie in den Fig. 1 bis Fig. 3 offenbart, sowie weitere Ausführungsformen mit unterschiedlichen Gew.% farbgebenden Füllmaterialien und unterschiedlichen Wandstärken des ersten Gehäuseabschnitts. Tabelle 1 offenbart die entsprechende Transparenz im sichtbaren Wellenlängenbereich (380nm - 780nm) wie auch im Infrarot-Wellenlängenbereich (5'000nm - 25'000nm), vom mittleren bis zum fernen Infrarot-Wellenlängenbereich.

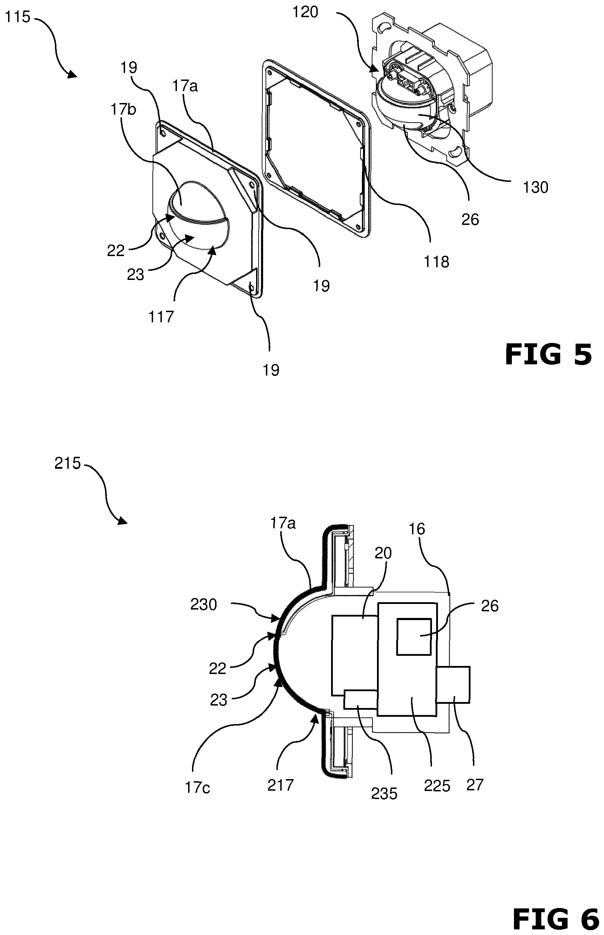

Fig. 5 offenbart eine weitere Ausführungsform der Sensoreinrichtung 115, welche im Wesentlichen funktionell und strukturell gleich wie die in den Fig. 1 bis Fig. 3 dargestellte Sensoreinrichtung 15 aufgebaut ist, jedoch eine eigene Dichtung 118 aufweist, welche vom ersten Gehäuseabschnitt 117 separierbar ist. Zusätzlich weist die erste Sensoreinheit 120 einen Infrarotsensor 121 auf, an dem ein Diffusor 130 angeordnet ist.

Fig. 6 offenbart eine weitere Ausführungsform der Sensoreinrichtung 215, welche im Wesentlichen funktionell und strukturell gleich wie die in den Fig. 1 bis Fig. 3 dargestellte Sensoreinrichtung 15 aufgebaut ist, wobei der Diffusor 230 im ersten Gehäuseabschnitt 217 integriert ist. Diese Sensoreinrichtung 215 weist zusätzlich ein Mikrofon 235 als weitere Sensoreinheit 230 auf, wobei das Kunststoffmaterial 22 zumindest abschnittsweise transparent für Schallwellen ist. Die elektronische Schalteinrichtung 225 erfasst die Signale der ersten Sensoreinheit 20 und die Signale des Mikrofons 235, sodass die Detektion auf vordefinierte Lebewesen selektierbar ist.

In einer nicht dargestellten Ausführungsform einer der Sensoreinrichtungen 15, 115, 215 welche im Wesentlichen funktionell und strukturell gleich wie die zuvor dargestellten Sensoreinrichtungen aufgebaut ist, ist eine Kamera als weitere Sensoreinheit vorhanden. Dabei ist zumindest der erste Gehäuseabschnitt im für die Kamera erfassbaren Wellenlängenbereich transparent. Die Signale der Kamera, können wie zuvor beschrieben, in der elektronischen Schalteinrichtung mit den Signalen der anderen Sensoreinheiten kombiniert werden, sodass auch bildgebende Signale auswertbar sind.

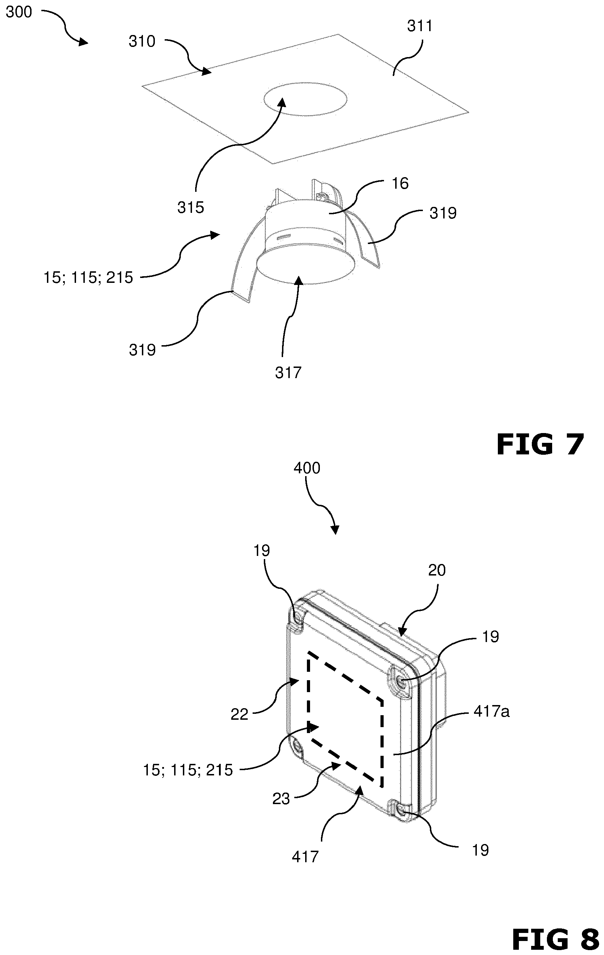

Fig. 7 zeigt eine erste Ausführungsform einer elektrischen Vorrichtung 300 mit zumindest einer der Sensoreinrichtungen 15, 115, 215 gemäss den Fig. 1 bis 6, wie zuvor offenbart, wobei zumindest eine der Sensoreinrichtungen 15, 115, 215 in der elektrischen Vorrichtung 400 positionierbar ist. Die elektrische Vorrichtung 300 ist eine Beleuchtungseinrichtung 310 mit einer Öffnung 315, wobei in diese Öffnung 315 zumindest eine der Sensoreinrichtungen 15, 115, 215 positioniert ist. Die Öffnung 315 und somit auch die Sensoreinrichtung 15, 115, 215 ist am Beleuchtungskörper 311, welcher in Richtung zum Beleuchtungskegel der Beleuchtungseinrichtung 310 ausgerichtet ist, angeordnet. Der erste Gehäuseabschnitt 317 umfasst ein separierbares Sensorgehäuseteil 317a, wobei hier kein Vorsprung vorhanden ist, sondern dieser Gehäuseteilabschnitt 317 an der Frontseite flach ausgebildet ist. Die Sensoreinrichtungen 15, 115, 215 werden mithilfe der Befestigungsklammern 319 in der Beleuchtungseinrichtung 310 positioniert. Die Beleuchtungseinrichtung 310 besteht aus einem ersten Material und das Sensorgehäuse 16 aus dem Kunststoffmaterial 22 mit dem farbgebenden Füllmaterial 23, wie zuvor offenbart.

Fig. 8 zeigt eine weitere Ausführungsform einer elektrischen Vorrichtung 400 mit einer der Sensoreinrichtungen 15, 115, 215 gemäss den Fig. 1 bis 6, wie zuvor offenbart, wobei zumindest eine der Sensoreinrichtungen 15, 115, 215 in der elektrischen Vorrichtung 400 integriert ist und der jeweilige erste Gehäuseabschnitt 417 nun nicht unmittelbar zu der Sensoreinrichtung 15, 115, 215 zugeordnet ist, sondern ein separierbares Vorrichtungsgehäuseteil ist, wie beispielsweise eine separierbare, flache Abdeckung 417a der elektrischen Vorrichtung 400 ist. Die Abdeckung weist eine Wandstärke von 0.35 mm auf sowie das Kunststoffmaterial 22 und das farbgebende Füllmaterial 23 und übernimmt somit die funktionellen und strukturellen Eigenschaften der zuvor in den Ausführungsformen gemäss den Fig. 1 bis Fig. 7 beschriebenen ersten Gehäuseteilabschnitte 17, 117, 217. Die elektrische Vorrichtung 400 ist eine elektrische Installationseinrichtung, wie beispielsweise ein Stromverteiler, ein Kabelkanal, eine Steckdose oder ein Raumverteiler.

In einer nicht dargestellten Ausführungsform der elektrischen Vorrichtung, welche im Wesentlichen funktionell und strukturell gleich der zuvor dargestellte elektrischen Vorrichtung 400 ausgebildet ist, ist die elektrische Vorrichtung zugleich ein Betätigungselement und nimmt mechanische Kräfte auf und/oder überträgt Kräfte an die elektronische Schalteinrichtung. Als Betätigungselement ist hier vorliegend ein Schalter oder ein Taster oder eine andere Installationseinrichtung, welche mechanische Kräfte aufnimmt und/oder überträgt, verwendbar.

### Bezugszeichenliste

- 15: Sensoreinrichtung
- 16: Sensorgehäuse
- 17: erster Gehäuseabschnitt
- 17a: Sensorgehäuseteil
- 17b: Vorsprung
- 17c: Fresnellinse
- 18: Dichtung
- 19: Befestigungsabschnitte
- 20: erste Sensoreinheit
- 21: Infrarotsensor
- 22: Kunststoffmaterial
- 23: farbgebendes Füllmaterial
- 25: elektronische Schalteinrichtung
- 26: Prozessor
- 27: Schnittstellen

- 115: Sensoreinrichtung
- 117: erster Gehäuseabschnitt
- 118: Dichtung
- 120: erste Sensoreinheit
- 121: Infrarotsensor
- 130: Diffusor

- 215: Sensoreinrichtung
- 217: erster Gehäuseabschnitt
- 225: elektronische Schalteinrichtung
- 230: Diffusor
- 235: Mikrofon
- 300: elektrische Vorrichtung
- 310: Beleuchtungseinrichtung
- 311: Beleuchtungskörper
- 315: Öffnung
- 317: erster Gehäuseabschnitt
- 317a: separierbares Sensorgehäuseteil
- 319: Befestigungsklammern

- 400: elektrische Vorrichtung
- 417: erster Gehäuseabschnitt
- 417a: flache Abdeckung

## Patentansprüche

1. Sensoreinrichtung (15; 115; 215) zum Erfassen einer Bewegung eines wärmestrahlenden Objekts, insbesondere zum Erfassen einer Bewegung eines Lebewesens, umfassend ein Sensorgehäuse (16) mit einer ersten Sensoreinheit (20; 120), wobei die erste Sensoreinheit (20) ausgebildet ist, elektromagnetische Strahlung im Infrarot-Bereich zu detektieren,
und das Sensorgehäuse (16) einen ersten Gehäuseabschnitt (17; 117; 217; 317) aus einem Kunststoffmaterial (22) aufweist, welcher transparent für elektromagnetische Strahlung im Wellenzahlenbereich von 2000cm⁻¹ bis 400 cm⁻¹ ist, und das Kunststoffmaterial (22) 0.5 bis 8 Gew.% farbgebendes Füllmaterial (23) umfasst.

2. Sensoreinrichtung nach Anspruch 1, **dadurch gekennzeichnet, dass** der erste Gehäuseabschnitt (17; 117; 217; 317) ein vom Sensorgehäuse (16) separierbares Sensorgehäuseteil (17a) ist.

3. Sensoreinrichtung nach Anspruch 1 oder 2, **dadurch gekennzeichnet, dass** das Kunststoffmaterial (22) des ersten Gehäuseabschnitts (17; 117; 217; 317) Polypropylen umfasst, insbesondere Polypropylen High-Modulus umfasst, und das Füllmaterial (23) bevorzugt Titanoxid, Talkum, Bariumsulfat oder HALS (Hindered Amine Light Stabilizers) umfasst.

4. Sensoreinrichtung nach einem der vorhergehenden Ansprüche, **dadurch gekennzeichnet, dass** der erste Gehäuseabschnitt (17; 117; 217; 317) eine Wandstärke von 0.15 mm bis 3.0 mm aufweist, und bevorzugt die Wandstärke grösser als 0.35 mm ist.

5. Sensoreinrichtung nach einem der vorhergehenden Ansprüche, **dadurch gekennzeichnet, dass** das Kunststoffmaterial (22) ein E-Modul von bis zu 3000 MPa aufweist und/oder eine Zugspannungsfestigkeit von 80 MPa aufweist.

6. Sensoreinrichtung nach einem der vorhergehenden Ansprüche, **dadurch gekennzeichnet, dass** das Sensorgehäuse (16) und zumindest der erste Gehäuseabschnitt (17; 117; 217; 317) dasselbe Kunststoffmaterial (22) umfassen.

7. Sensoreinrichtung nach einem der vorhergehenden Ansprüche, **dadurch gekennzeichnet, dass** zumindest eine elektronische Schalteinrichtung (25; 225) vorhanden ist, welche im Sensorgehäuse (16) angeordnet ist.

8. Sensoreinrichtung nach einem der vorhergehenden Ansprüche, **dadurch gekennzeichnet, dass** im ersten Gehäuseabschnitt (17; 117; 217; 317) eine Dichtung (18; 118) realisiert ist, die in einem thermischen Spritzgussprozess an den ersten Gehäuseabschnitt (17; 117; 217; 317) anbringbar ist.

9. Sensoreinrichtung nach einem der vorhergehenden Ansprüche, **dadurch gekennzeichnet, dass** eine optische Linse vorhanden ist, und bevorzugt der erste Gehäuseabschnitt (17; 117; 217; 317) abschnittsweise als optische Linse ausgebildet ist, und die optische Linse vorteilhaft eine Fresnellinse (17c) ist.

10. Sensoreinrichtung nach einem der vorhergehenden Ansprüche, **dadurch gekennzeichnet, dass** ein optischer Diffusor (130; 230) vorhanden ist, welche in dem ersten Gehäuseabschnitt (17; 117; 217; 317) angeordnet ist.

11. Sensoreinrichtung nach einem der vorhergehenden Ansprüche, **dadurch gekennzeichnet, dass** ein Mikrofon (325) als weitere Sensoreinheit vorhanden ist, wobei das Kunststoffmaterial (22) zumindest abschnittsweise transparent für Schallwellen ist.

12. Elektrische Vorrichtung (300; 400), insbesondere elektrische Installationseinrichtung für einen Innenraum oder einer Aussenanlage umfassend eine Sensoreinrichtung (15; 115; 215) nach einem der Ansprüche 1 bis 11, wobei die Sensoreinrichtung (15; 115; 215) in der elektrischen Vorrichtung (300; 400) integriert ist und bevorzugt zumindest der erste Gehäuseabschnitt (17; 117; 217; 317) separierbar an der elektrischen Vorrichtung (300; 400) angeordnet ist, wobei der erste Gehäuseabschnitt (417) insbesondere ein separierbares Vorrichtungsgehäuseteil (417a) ist.

13. Elektrische Vorrichtung nach Anspruch 12, **dadurch gekennzeichnet, dass** elektrische Vorrichtung eine Beleuchtungseinrichtung (310), oder eine elektrische Schaltereinrichtung, oder ein elektrisches Gerät ist.

14. Elektrische Vorrichtung nach Anspruch 12 oder 13, **dadurch gekennzeichnet, dass** die Sensoreinrichtung (15; 115; 215) in der elektrischen Vorrichtung zugleich ein Betätigungselement ist und mechanische Kräfte aufnimmt und/oder Kräfte an die elektronische Schalteinrichtung überträgt.

15. Verwendung einer Sensoreinrichtung (15; 115; 215) nach einem der Ansprüche 1 bis 11 in einer elektrischen Vorrichtung (300; 400) nach einem der Ansprüche 12 bis 14.
